# EUROPÄISCHE PATENTSCHRIFT

(11) **EP 3 771 042 B1**
(45) Veröffentlichungstag und Bekanntmachung des Hinweises auf die Patenterteilung: **04.10.2023**
(21) Anmeldenummer: 19305980.5
(22) Anmeldetag: 26.07.2019
(51) Int. Cl.: H01R 4/02, H01R 43/02, B23K 20/12, B23K 20/00, B23K 101/32

(54) **HERSTELLUNG EINER FLÄCHIGEN VERBINDUNG ZWISCHEN EINEM ELEKTRISCHEN LEITER UND EINEM KONTAKTSTÜCK**
PRODUCTION OF A FLAT CONNECTION BETWEEN AN ELECTRICAL CONDUCTOR AND A CONTACT PIECE
FABRICATION D'UN RACCORDEMENT PLAT ENTRE UN CONDUCTEUR ÉLECTRIQUE ET UNE PIÈCE DE CONTACT

(43) Veröffentlichungstag der Anmeldung: 27.01.2021
(73) Patentinhaber: Nexans, 92400 Courbevoie (FR)
(72) Erfinder: STEINBERG, Helmut, 92685 FLOSS (DE)
(74) Vertreter: Ipsilon

(56) Entgegenhaltungen:
- EP-A1- 2 735 397
- JP-A- 2004 160 477
- RENÉ SCHÜRER ET AL: "Friction stir spot welding of aluminum wires to copper terminals", 3RD INTERNATIONAL CONFERENCE ON SCIENTIFIC AND TECHNICAL ADVANCES ON FRICTION STIR WELDING & PROCESSING . FSWP 2014, 16. Oktober 2014 (2014-10-16), XP055660943,

## Beschreibung

### Gebiet

Die Erfindung betrifft ein Verfahren zum elektrisch leitenden Verbinden eines Kontaktteiles mit einem Leiter sowie einen elektrischen Leiter, der nach diesem Verfahren hergestellt ist. Das Verfahren betrifft Leiter aus Aluminium oder einer Aluminiumlegierung, die als Litzenleiter ausgebildet sind.

### Hintergrund

Leiter aus Aluminium werden insbesondere aus Gewichts- und Kostengründen vermehrt als Ersatz für Kupferleiter verwendet. Haupteinsatzgebiete derartiger Leiter sind beispielsweise die Automobil- und die Flugzeugtechnik. Die geringere elektrische Leitfähigkeit des Aluminiums gegenüber Kupfer spielt für die meisten Anwendungen keine Rolle. Probleme ergeben sich aber beim Anbringen von Kontaktteilen an den Leitern, da Aluminiumleiter von einer elektrisch sehr schlecht leitenden Oxidschicht umgeben sind. Dieser Mangel macht sich besonders bei aus einer Vielzahl von Einzeldrähten bestehenden, auch als Litzenleiter bezeichneten Leitern bemerkbar. Die Einzeldrähte sind von einer ohne Sonderbehandlung nicht zu vermeidenden Oxidschicht umgeben. Diese Problematik ist seit langem bekannt. Elektrische Leitungen mit einem solchen Leiter, der zweckmäßigerweise von einem Mantel aus Isoliermaterial umgeben ist, werden vielfach im Fahrzeugbereich verbaut. Um solche Leitungen in der Produktion effektiv und zeitsparend verbauen zu können, werden die Leitungen an ihren Enden mit elektrischen Kontaktteilen versehen, die auch als "Terminal" bezeichnet werden.

Das Kontaktteil auf Kupfer- oder Aluminiumbasis besteht aus Kupfer oder aus einer Kupferlegierung bzw. aus Aluminium oder einer Aluminiumlegierung. Es kann auf seiner äußeren Oberfläche zusätzlich eine Schicht aus beispielsweise Zinn, Zink oder Nickel aufweisen, die beispielsweise galvanisch abgeschieden ist. Das Kontaktteil wird im Folgenden ohne Materialangabe nur als "Kontaktteil" bezeichnet.

Die Einzeldrähte des Leiters bestehen entweder aus Aluminium oder aus einer Aluminiumlegierung. Der Einfachheit halber wird im Folgenden nur der Begriff "Aluminium" verwendet, um sowohl Aluminium als auch Legierungen daraus zu bezeichnen.

Aus der EP 2 735 397 A1 ist beispielsweise ein Verfahren bekannt, bei dem ein topfförmiges Kontaktteil auf einen Litzenleiter aufgeschoben wird. Das Kontaktteil ist je nach Anwendungsfall mit unterschiedlichen Anschlusselementen versehen. Das Kontaktteil wird als einstückiges Bauteil durch Tiefziehen hergestellt und durch Rührreibschweißen mit dem Leiter stoffschlüssig verbunden.

Die JP 2004-160477 A beschreibt ebenfalls die Verbindung von Aluminiumdrähten mit einem Kontaktteil durch Rührreibschweißen. Bei einem Ausführungsbeispiel werden die Drähte nacheinander mit einem Kontaktteil verschweißt. Dabei erfolgt eine relative Bewegung zwischen einem Werkzeug für das Rührreibschweißen und dem Kontaktteil, wobei das Werkzeug feststeht, während das Kontaktstück in Bezug auf das Werkzeug bewegt wird.

Bei dem bekannten Rührreibpunktschweißen ("Friction Spot Stir Welding") wird eine stirnflächige Verbindung zwischen einem Litzenleiter und einem Kontaktteil hergestellt. Damit die Litzen bei dem Schweißvorgang nicht aufbürsten, müssen sie in einer Hülse geführt bzw. verpresst oder vercrimpt werden. Bei der Verbindung zwischen dem Litzenleiter und dem Kontaktteil muss somit zusätzlich die Hülse als Bauteil bereitgestellt werden. Außerdem ist ein zusätzlicher Arbeitsschritt vor dem Verschweißen notwendig.

Hiervon ausgehend hat die vorliegende Erfindung die Aufgabe, ein Verfahren zu schaffen, um eines oder mehrere der eingangs genannten Probleme zu überwinden oder zumindest zu verbessern.

### Zusammenfassung der Erfindung

Zur Lösung dieser Aufgabe schlägt die Erfindung nach einem ersten Aspekt ein Verfahren zum elektrisch leitenden Verbinden eines Kontaktteiles mit einem Leiter, der eine Vielzahl von Einzeldrähten aus Aluminium oder einer Aluminiumlegierung umfasst. Das Verfahren weist die Schritte auf
- Einstecken des Leiters in einen Hohlraum in dem Kontaktteil;
- Absenken eines Werkzeuges für Rührreibschweißen auf das Kontaktteil. Das Verfahren ist gekennzeichnet durch die Schritte
- zweidimensionales Bewegen des Werkzeuges für Rührreibschweißen auf dem Kontaktteil in einer Ebene, die im Wesentlichen senkrecht zu einer Richtung liegt, in der das Absenken des Werkzeuges ausgeführt wird, wodurch eine flächige stoffschlüssige Verbindung zwischen dem Kontaktteil und dem Leiter entsteht.

Bei dem Verfahren fährt das Werkzeug nach dem "eintauchen" einen Weg entlang des abisolierten Litzenleiters ab und bewirkt dadurch ein flächiges Rührreibschweißen. Auf diese Weise wird eine direkte stoffschlüssige Verbindung eines Litzenleiters und eines Kontaktteils hergestellt, ohne ein Zusatzteil wie die erwähnte Hülse, um das "Aufbürsten" des Litzenleiters zu verhindern. Zweckmäßigerweise hat der Hohlraum eine Gestalt, die komplementär zur Gestalt des abisolierten Leiters ist.

Die zweidimensionale Bewegung ermöglicht eine flächige stoffschlüssige Verbindung zwischen dem Leiter und dem Kontaktteil auch dann, wenn der Durchmesser des Werkzeuges für Rührreibschweißen kleiner ist als der Durchmesser des zu verschweißenden Leiters.

Bei einem besonders vorteilhaften Ausführungsform des erfindungsgemäßen Verfahrens werden auch die Einzeldrähte des Leiters miteinander stoffschlüssig verbunden. Auf diese Weise wird erreicht, dass alle Einzellitzen des Leiters gleichermaßen am Stromtransport beteiligt sind.

Durch die flächige stoffschlüssige Verbindung wird eine ausreichende Querleitfähigkeit zwischen den Einzellitzen als auch eine metallurgische Verbindung mit dem Kontaktteil hergestellt. Die Querleitfähigkeit zwischen den Einzellitzen ist insbesondere bei Aluminiumleitern von Bedeutung, weil die Einzellitzen mit einer isolierenden Oxidschicht überzogen sind. Bei mangelnder Querleitfähigkeit, d.h. wenn nicht alle Einzellitzen kontaktiert sind, wird der Querschnitt des Leiters für den Stromtransport nicht optimal ausgenutzt, wodurch sich Probleme im Dauerbetrieb der Leitung ergeben können.

Typischerweise ist das Kontaktteil ein massives Teil, zum Beispiel eine Stromschiene wie sie beispielsweise in Elektrofahrzeugen oder Fahrzeugen mit Hybridantrieb verwendet wird.

Das erfindungsgemäße Verfahren schlägt somit ein robustes kostengünstiges Schweißverfahren vor, das gut automatisierbar ist und keine zusätzlichen Teile wie zum Beispiel die erwähnte Hülse benötigt.

Bei einem Ausführungsbeispiel des Verfahrens wird das Bewegen des Werkzeuges für Rührreibschweißen in einer Ebene ausgeführt, die im Wesentlichen senkrecht zu einer Richtung liegt, in der das Absenken des Werkzeuges ausgeführt wird.

Bei einer nicht erfindungsgemäßen Ausführungsform kann das Bewegen des Werkzeuges translatorisch entlang einer Linie erfolgen. Diese Ausführungsform ist insbesondere dann geeignet, wenn der Durchmesser des Werkzeuges für Rührreibschweißen größer ist als der Durchmesser des Leiters, der mit dem Kontaktteil verschweißt wird.

Zweckmäßigerweise kann die zweidimensionale Bewegung des Werkzeuges für Rührreibschweißen translatorisch entlang einer X-Y-Kontur erfolgen.

Alternativ dazu kann die zweidimensionale Bewegung des Werkzeuges für Rührreibschweißen aus einer Überlagerung einer Translations- und Kreisbewegung zusammengesetzt ist.

Nach einem zweiten Aspekt schlägt die Erfindung eine elektrische Leitung mit einem Leiter vor, der eine Vielzahl von Einzeldrähte aus Aluminium oder einer Aluminiumlegierung aufweist und der mit einem Kontaktteil verbunden ist. Die Einzeldrähte des Leiters sind untereinander und mit dem Kontaktteil mit einer flächigen stoffschlüssigen Verbindung verbunden sind, die durch Rührreibschweißen gemäß dem ersten Aspekt der Erfindung hergestellt ist.

Bei einem Ausführungsbeispiel ist das Kontaktteil der elektrischen Leitung auf Kupfer- oder Aluminiumbasis oder einer Legierung davon hergestellt.

Bei einer Ausführungsform der elektrischen Leitung ist das Kontaktteil als Stromschiene ausgebildet.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine Draufsicht auf eine Stirnseite eines massiven Kontaktteils;
- Fig. 2: einen Querschnitt durch das Kontaktteil aus Figur 1 mit einem eingesteckten Leiter;
- Fig. 3A: eine erste Draufsicht auf das Kontaktteil mit dem eingesteckten Leiter aus Figur 2;
- Fig. 3B: eine zweite Draufsicht auf das Kontaktteil mit dem eingesteckten Leiter aus Figur 2;
- Fig. 3C: eine dritte Draufsicht auf das Kontaktteil mit dem eingesteckten Leiter aus Figur 2; und
- Fig. 4: ein Flussdiagramm des erfindungsgemäßen Verfahrens.

Gleiche oder ähnliche Elemente sind in den Figuren mit gleichen oder ähnlichen Bezugszeichen versehen.

### Ausführungsbeispiel

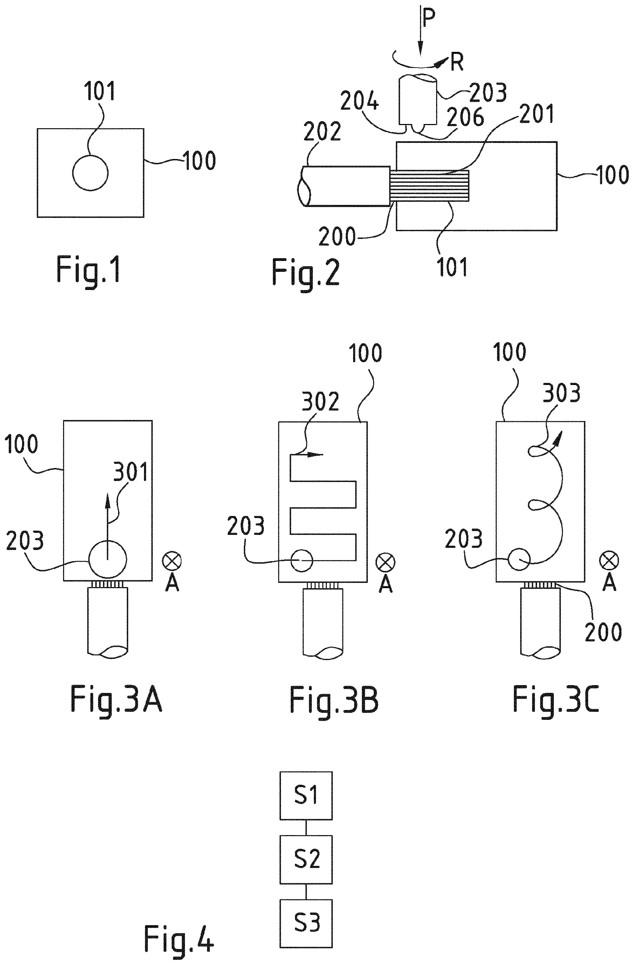

Figur 1 zeigt schematisch eine Draufsicht auf eine Stirnseite eines Kontaktteils 100, das als massives Bauteil ausgebildet ist. Das Kontaktteil 100 weist einen Hohlraum 101 auf, der zur Aufnahme eines elektrischen Leiters dient wie weiter unten noch beschrieben wird. Der Hohlraum 101 ist zum Beispiel als Sackbohrung ausgeführt, wobei es im Zusammenhang mit der Erfindung nicht darauf ankommt, wie der Hohlraum hergestellt ist. Neben anderen spanabhebenden Herstellungsverfahren kann der Hohlraum auch durch Umformen des Kontaktteils oder, wenn das Kontaktteil ein Gussteil ist, beim Gießen des Kontaktteils hergestellt sein. Der Hohlraum kann auch als Nut ausgebildet sein.

Bei einem Ausführungsbeispiel weist das Kontaktteil 100 Befestigungsmittel (nicht dargestellt) auf, mit denen das Kontaktteil zum Beispiel mit einer elektrischen Batterie oder einer elektrischen Maschine verbunden ist. Im einfachsten Fall sind die Befestigungsmittel Schraubenlöcher, in die eine entsprechende Befestigungsschraube eingesetzt wird.

Figur 2 zeigt das Kontaktteil aus Figur 1 in einem Querschnitt mit einem in den Hohlraum 101 des Kontaktteils 100 eingesetzten Leiter 200. Der Leiter 200 ist aus einer Vielzahl von Einzeldrähten bzw. Einzellitzen hergestellt, die miteinander verdreht und/oder verseilt sind und einem Litzenleiter bilden. Der Leiter 200 ist mit einem isolierenden Mantel 202 umgeben. Die Einzellitzen 201 bestehen aus Aluminium oder einer Aluminiumlegierung. Da Aluminium und seine Legierungen leicht oxidieren und sich mit einer isolierenden Oxidschicht überziehen, ist es im praktischen Einsatz von Litzenleitern aus Aluminium von großer Bedeutung, dass alle Einzellitzen 201 kontaktiert werden, um den Querschnitt des Leiters 200 für den Stromtransport bestmöglich auszunutzen. Der isolierende Mantel 202 ist an einem Ende des Leiters 200 entfernt, welches in den Hohlraum 101 des Kontaktteils 100 eingesteckt ist. Wie aus Figur 2 ersichtlich ist, ist der Durchmesser des Hohlraumes 101 so bemessen, dass der Leiter 200 in den Hohlraum einsteckbar ist, ohne dass die Einzellitzen 201 "aufbürsten", d.h. ohne dass einzelne oder mehrere Einzellitzen 201 nicht in dem Hohlraum 101 aufgenommen sind, sondern nach außen abstehen.

Die elektrische Verbindung zwischen dem Kontaktteil 100 und dem Leiter 200 wird durch eine flächige stoffschlüssige Verbindung hergestellt, die zum einen eine metallurgische Verbindung zwischen dem Leiter 200 bzw. den Litzenleitern 201 und dem Kontaktstück 100 herstellt und zum anderen gleichzeitig eine metallurgische Verbindung zwischen den einzelnen Litzenleitern 201 herstellt. Auf diese Weise wird eine gute Querleitfähigkeit hergestellt, sodass alle Einzellitzen 201 zum Stromtransport beitragen und der Querschnitt des Leiters 200 für den Stromtransport optimal genutzt wird.

Erfindungsgemäß wird die flächige stoffschlüssige Verbindung durch Rührreibschweißen hergestellt. Bei diesem Schweißverfahren wird die für eine Verschweißung benötigte Temperatur durch Reibung erzeugt. Dabei verbindet sich das Material des Kontaktteils 100 mit dem Litzenleiter 200 bei einer Temperatur unterhalb der Schmelztemperatur der verwendeten Metalle stoffschlüssig bzw. wird durch Diffusion miteinander verschweißt. Dazu tragen auch der durch das Werkzeug 203 aufgebrachte Druck und die dadurch verrichtete Umformarbeit bei. Das bei dem Verfahren eingesetzte Werkzeug hat dementsprechend eine Reibfläche 204, deren Wirksamkeit durch eine zentral angeordnete vorspringende Nase 206 verbessert ist. Zur Herstellung der Verbindung wird das schnell rotierende Werkzeug 203 auf das Kontaktteil 100 abgesenkt. In Figur 2 ist die Rotation des Werkzeugs 203 durch einen Pfeil R angedeutet und die Absenkbewegung durch einen Pfeil P. Mit dem Werkzeug 203 wird Druck auf das Kontaktteil 100 ausgeübt der gemeinsam mit der Rotationsbewegung dazu führt, dass das Material des Kontaktteiles 100 und die einzelnen Litzen 201 in einen plastischen Zustand übergehen und untereinander eine metallurgische stoffschlüssige Verbindung eingehen.

Beim Anlegen des Werkzeugs 203 an das Kontaktteil 100 ist dasselbe vorteilhafterweise bereits in Rotation versetzt. Es kann aber auch erst nach dem Anlegen an das Kontaktteil in Rotation versetzt werden.

Durch das bloße Absenken des rotierenden Werkzeuges 203 wird allerdings nur eine Punktschweißung erreicht, die für Hochvolt- und/oder Hochstromanwendungen, wie sie beispielsweise bei Elektrofahrzeugen vorliegen, nicht ausreicht.

Figur 3A veranschaulicht wie eine flächige Verbindung zwischen dem Leiter 200 und den Kontaktteil 100 erreicht wird. Dieses erste Verfahren zur Herstellung der Verbindung ist nicht Teil der Erfindung. Hierfür wird das Werkzeug 203, dessen Durchmesser ungefähr den Durchmesser des Leiters 200 entspricht oder größer ist entlang des Pfeiles 301 auf den Kontaktteil 100 bewegt. Auf diese Weise entsteht eine flächige Schweissverbindung durch Rührreibschweißen mit den eingangs genannten Vorteilen. Die Fläche der Verschweißung entspricht in der einen Richtung ungefähr dem Durchmesser des Werkzeuges 203 und in der anderen Richtung der Länge des Pfeiles 301.

Figur 3B veranschaulicht eine alternative Vorgehensweise zur Herstellung der flächigen Verbindung zwischen dem Kontaktteil 100 und dem Leiter 200. Gemäß der alternativen Vorgehensweise wird das Werkzeug 203, dessen Durchmesser kleiner ist als der Durchmesser des Leiters 200, entlang einer X-Y-Kontur bewegt, wobei wiederum eine flächige stoffschlüssige Schweissverbindung durch Rührreibschweißen erzeugt wird. Die X-Y-Kontur ist in Figur 3B durch einen Pfeil 302 angedeutet. Dieses alternative Verfahren ist insbesondere dann vorteilhaft, wenn der Leiter 200 einen vergleichsweise großen Durchmesser hat.

Schließlich zeigt Figur 3C ein weiteres Verfahren, um die flächige stoffschlüssige Verbindung zwischen dem Kontaktteil 100 und dem Leiter 200 herzustellen. Hierbei wird das Werkzeug 203 auf einer Zykloide entlang des in das Kontaktteil 100 eingesteckten Leiters 200 bewegt. Die Zykloide entsteht durch die Überlagerung einer translatorischen Bewegung mit einer Kreisbewegung und ist in Figur 3C durch den Pfeil 303 symbolisiert. Auch dieses Verfahren ist für Leiter 200 geeignet, die einen vergleichsweise großen Durchmesser haben.

Bei anderen Ausführungsformen führt das Werkzeug auf dem Kontaktteil 100 andere Bewegungsmuster aus, zum Beispiel eine Zickzacklinie. In weiteren Ausführungsformen führt das Werkzeug 203 Bewegungsmuster auf dem Kontaktteil 100 aus, die aus einer Kombination der beschriebenen Bewegungsmuster erzeugt sind.

Die Richtung der Absenkung des Werkzeuges 203 ist in den Figuren 3A bis 3C durch einen Pfeil A in die Zeichenebene hinein symbolisiert. Dementsprechend führt das Werkzeug 203 eine Bewegung in der Zeichenebene auf das Kontaktteil 100 zu aus.

In allen in den Figuren 3A bis 3C dargestellten Verfahren zur Herstellung der flächigen stoffschlüssigen Verbindung wird das Werkzeug 203 von dem Kontaktteil 100 angehoben, wenn das Werkzeug 203 ein Stück über das sich in dem Hohlraum 101 befindliche Ende des Leiters 200 hinausgefahren ist. Dadurch wird der Leiter 200 auf seiner ganzen Länge, die sich in dem Hohlraum 101 befindet, mit dem Kontaktteil 100 stoffschlüssig verbunden.

Figur 4 zeigt ein Flussdiagramm des Verfahrens zur Herstellung einer flächigen stoffschlüssigen Verbindung in einer allgemeinen Form. In einem ersten Schritt S1 wird der Leiter 100 in den Hohlraum 101 in dem Kontaktteil 100 eingesteckt. Dann wird in einem Schritt S2 das Werkzeug 203 für Rührreibschweißen auf das Kontaktteil 100 abgesenkt und in Rotation versetzt, wenn es nicht schon vor dem Absenken rotiert hat. Schließlich wird in einem Schritt S3 das abgesenkte Werkzeug 203 auf dem Kontaktteil 100 in einer Ebene bewegt, die sich im Wesentlichen senkrecht zu der Richtung erstreckt, in welcher die Absenkung des Werkzeuges 203 ausgeführt wird. Bei diesem letzten Schritt S3 werden die Einzellitzen 201 des Leiters 200 stoffschlüssig miteinander und mit dem Kontaktteil 100 verbunden, so dass eine flächige stoffschlüssige Verbindung entsteht.

### Bezugszeichenliste

- 100: Kontaktteil
- 101: Hohlraum

- 200: Leiter
- 201: Einzellitzen
- 202: isolierender Mantel
- 203: Werkzeug
- 204: Reibfläche
- 206: Nase

- 301: Bewegungsrichtung
- 302: Bewegungsrichtung
- 303: Bewegungsrichtung

## Patentansprüche

1. Verfahren zum elektrisch leitenden Verbinden eines Kontaktteiles (100) mit einem Leiter (200), der eine Vielzahl von Einzeldrähten (201) aus Aluminium oder einer Aluminiumlegierung umfasst, wobei das Verfahren die Schritte aufweist
- Einstecken (S1) des Leiters (200) in einen Hohlraum (101) in dem Kontaktteil (100);
- Absenken (S2) eines Werkzeuges (203) für Rührreibschweißen auf das Kontaktteil (100);
wobei das Verfahren **gekennzeichnet ist durch** die Schritte
- zweidimensionales Bewegen (S3) des Werkzeuges (203) für Rührreibschweißen auf dem Kontaktteil (100) in einer Ebene, die im Wesentlichen senkrecht zu einer Richtung (A) liegt, in der das Absenken des Werkzeuges (203) ausgeführt wird, wodurch eine flächige stoffschlüssige Verbindung zwischen dem Kontaktteil (100) und dem Leiter (200) entsteht.

2. Verfahren nach Anspruch 1, **dadurch gekennzeichnet, dass** es weiterhin den Schritt umfasst
- stoffschlüssiges Verbinden (S3) der Einzeldrähte (201) des Leiters (200) miteinander.

3. Verfahren nach Anspruch 1, **dadurch gekennzeichnet, dass** die zweidimensionale Bewegung des Werkzeuges für Rührreibschweißen translatorisch entlang einer X-Y-Kontur (302) erfolgt.

4. Verfahren nach Anspruch 1, **dadurch gekennzeichnet, dass** die zweidimensionale Bewegung des Werkzeuges für Rührreibschweißen aus einer Überlagerung einer Translations- und Kreisbewegung (303) zusammengesetzt ist.

5. Elektrische Leitung mit einem Leiter (200), der eine Vielzahl von Einzeldrähten (201) aus Aluminium oder einer Aluminiumlegierung aufweist und der mit einem Kontaktteil (100) verbunden ist, wobei die Einzeldrähte (201) des Leiters (200) untereinander und mit dem Kontaktteil (100) mit einer flächigen stoffschlüssigen Verbindung verbunden sind, die durch Rührreibschweißen nach einem der Ansprüche 1 bis 4 hergestellt ist.

6. Elektrische Leitung nach Anspruch 5, **dadurch gekennzeichnet, dass** das Kontaktteil (100) auf Kupfer- oder Aluminiumbasis oder einer Legierung davon hergestellt ist.

7. Elektrische Leitung nach Anspruch 5 oder 6, **dadurch gekennzeichnet, dass** das Kontaktteil (100) eine Stromschiene ist.

## Claims

1. A method for the electrically conductive connection of a contact piece (100) to a conductor (200), which comprises a plurality of individual wires (201) made of aluminum or an aluminum alloy, wherein the method has the steps
- insertion (S1) of the conductor (200) into a cavity (101) in the contact piece (100);
- lowering (S2) a tool (203) for friction stir welding onto the contact piece (100),
wherein the method is **characterized by** the steps
- two-dimensional movement (S3) of the tool (203) for friction stir welding onto the contact piece (100) in a plane, which lies substantially perpendicular to a direction (A), in which the lowering of the tool (203) is carried out, which results in a flat material connection between the contact piece (100) and the conductor (200).

2. The method according to claim 1, **characterized in that** it furthermore comprises the step
- material connection (S3) of the individual wires (201) of the conductor (200) with one another.

3. The method according to claim 1, **characterized in that** the two-dimensional movement of the tool for friction stir welding takes place translationally along an X-Y contour (302).

4. The method according to claim 1, **characterized in that** the two-dimensional movement of the tool for friction stir welding is composed of a superimposition of a translational and circular movement (303).

5. An electric line with a conductor (200), which has a plurality of individual wires (201) made of aluminum or an aluminum alloy and which is connected to a contact piece (100), wherein the individual wires (201) of the conductor (200) are connected with one another and to the contact piece (100) with a flat material connection, which is produced by friction stir welding according to any one of claims 1 to 4.

6. The electric line according to claim 5, **characterized in that** the contact piece (100) is made of copper or aluminum or an alloy thereof.

7. The electric line according to claim 5 or 6, **characterized in that** the contact piece (100) is a busbar.

## Revendications

1. Procédé pour le raccordement électroconducteur d'une pièce de contact (100) avec un conducteur (200), qui comprend une pluralité de fils individuels (201) en aluminium ou en alliage d'aluminium, dans lequel le procédé comprend les étapes suivantes :
- insertion (S1) du conducteur (200) dans une cavité (101) dans la pièce de contact (100) ;
- abaissement (S2) d'un outil (203) pour un soudage par friction-malaxage sur la pièce de contact (100) ;
dans lequel le procédé est **caractérisé par** les étapes suivantes
- déplacement bidimensionnel (S3) de l'outil (203) pour le soudage par friction-malaxage sur la pièce de contact (100) dans le plan qui est globalement perpendiculaire à une direction (A) dans laquelle l'abaissement de l'outil (203) est effectué, ce qui permet d'obtenir un raccordement par liaison de matière plane entre la pièce de contact (100) et le conducteur (200).

2. Procédé selon la revendication 1, **caractérisé en ce qu'**il comprend en outre l'étape suivante :
- raccordement par liaison de matière (S3) des fils individuels (201) du conducteur (200) entre eux.

3. Procédé selon la revendication 1, **caractérisé en ce que** le déplacement bidimensionnel de l'outil pour soudage par friction-malaxage a lieu en translation le long d'un contour X-Y (302).

4. Procédé selon la revendication 1, **caractérisé en ce que** le déplacement bidimensionnel de l'outil pour soudage par friction-malaxage est constitué d'une superposition d'un mouvement de translation et d'un mouvement circulaire (303).

5. Câble électrique avec un conducteur (200), qui comprend une pluralité de fils individuels (201) en aluminium ou en alliage d'aluminium et qui est relié avec une pièce de contact (100), dans lequel les fils individuels (201) du conducteur (200) sont reliés entre eux et avec la pièce de contact (100) avec un raccordement par liaison de matière, qui est réalisée à l'aide d'un soudage par friction-malaxage selon l'une des revendications 1 à 4.

6. Câble électrique selon la revendication 5, **caractérisé en ce que** la pièce de contact (100) est réalisée à base de cuivre ou d'aluminium ou d'un alliage de ceux-ci.

7. Câble électrique selon la revendication 5 ou 6, **caractérisé en ce que** la pièce de contact (100) est un rail conducteur.
